# EUROPÄISCHE PATENTSCHRIFT

(11) **EP 1 492 383 B1**
(45) Veröffentlichungstag und Bekanntmachung des Hinweises auf die Patenterteilung: **19.08.2009**
(21) Anmeldenummer: 04020809.2
(22) Anmeldetag: 07.09.2000
(51) Int. Cl.: H04R 25/00, B29C 65/16

(54) **Hörgerät**
Hearing device
Appareil auditif

(43) Veröffentlichungstag der Anmeldung: 29.12.2004
(62) Teilanmeldung aus: 00956012.9
(73) Patentinhaber: PHONAK AG, 8712 Stäfa (CH)
(72) Erfinder: Niccolai, Richard, 8610 Uster (CH)
(74) Vertreter: Troesch Scheidegger Werner AG

(56) Entgegenhaltungen:
- EP-A- 0 821 542
- EP-A- 0 821 543

## Beschreibung

Die vorliegende Erfindung betrifft ein Aussenrohr-Hörgerät nach dem Oberbegriff von Anspruch 1 sowie ein Hörgerätegehäuse nach dem Oberbegriff von Anspruch 4 und ein Hörgerät mit solchen Gehäuse.

Zwei- oder Mehrkomponenten-Spritzgiessverfahren sind aus der Kunststoff-Verarbeitungstechnik bekannt. Es kann beispielsweise verwiesen werden auf Ch. Jaroschek "Das Mehrkomponenten-Spritzgiessverfahren" Swiss Plastics 19 (1997) Nr. 12 oder auf U. Stenglin "Hart/Weich-Verbindungen und anwendungsbezogene Modifizierbarkeit von TPE-S (SEBS/SEPS)", Swiss Plastics 20 (1998) Nr. 3. Darin sind die Vorteile von Zwei- oder Mehrkomponenten-Spritzgiessverfahren erläutert, nämlich bezüglich Werkzeugkosten, Personalkosten, Maschinenkosten und Materialkosten. Die erwähnten Verfahren werden grundsätzlich in Sandwich-Spritzgiessverfahren und in Overmoulding-Verfahren kategorisiert. Im vorliegenden Fall interessiert, wenn auch nicht ausschliesslich so doch primär, das erwähnte Overmoulding-Verfahren. Dabei wird ein Teil aus einer ersten Materialkomponente gefertigt und mindestens abschnittsweise mit einer zweiten, unterschiedlichen Materialkomponente überspritzt, womit an den ersten Teil der Zweite aus unterschiedlichem Material, aufgebaut wird. Es lassen sich alle spritzfähigen Thermoplast-Werkstoffe, insbesondere auch für das Overmoulding-Verfahren, einsetzen, aber auch ganz gezielt nicht verbindbare weitere Materialien.

Aus EP 0 821 543 A2 ist bekannt, ein Innenohr-Hörgerät mit einer Membran zu umschliessen, die Befestigungsmittel für eine abnehmbare Schutzkappe als Cerumenschutz aufweist. Weiter offenbart die genannte EP 0 821 543 A2, bei der Herstellung der Membran mittels eines Spritzgussverfahrens beschränkt verschiedene Materialien aneinander zu giessen und so eine Formschlusspartie des Befestigungsmittels härter auszubilden als den Rest der Membran.

Selbstverständlich sind auch bei der Hörgeräte-Produktion die oben erwähnten Kosten wichtige Produktionsfaktoren. Hinzu kommt aber bei der Hörgeräte-Fertigung grundsätzlich das Platzproblem, indem es ein permanentes Bedürfnis der erwähnten Branche ist, möglichst platzsparend zu bauen.

Es ist Aufgabe der vorliegenden Erfindung, ein verbessertes Hörgerät vorzuschlagen, insbesondere ein Hörgerät mit erhöhter Baudichte oder mit verbesserter Herstellbarkeit.
Zur mindestens teilweisen Lösung dieser Aufgabe wird ein Hörgerät nach Anspruch 1, ein Hörgerätegehäuse nach Anspruch 4 und ein Hörgerät mit einem solchen Hörgerätegehäuse vorgeschlagen.
Bei der Hörgeräteherstellung können mindestens zwei der am Hörgerät zu assemblierenden Teile in Zweioder Mehrkomponenten-Spritzgiesstechnik gefertigt und gemeinsam assembliert werden. Selbstverständlich ist der dabei sich gegebenenfalls einstellende Vorteil der Reduktion obgenannter Kosten hoch willkommen, wesentlicher ist aber, dass durch Einsatz des erwähnten Verfahrens das für die Hörgeräte-Bautechnik essentielle Kriterium, die Erhöhung der Komponentendichte pro cm³ zur Verfügung stehenden Platzes erreicht wird.

Wird bei einem solchen Herstellungsverfahren als einer der Teile, mindestens eine Partie des Hörgeräte-Gehäuses eingesetzt, also beispielsweise die eine Schale eines zweischaligen Gehäuses, so können daran mit dem Zwei- oder Mehrkomponenten-Spritzgiessverfahren weitere Wirkungs-Teile, insbesondere Dichtungen, z.B. zum dichten Vereinigen mit der zweiten Gehäuseschale und/oder schlagdämpfende Aufnehmungen für einzubauende, heikle Gerätekomponente und/oder weitere aktive Hörgeräte-Komponenten, wie akustische Leiter, direkt angebaut werden. Grundsätzlich ergibt sich dadurch die Möglichkeit, Verbindungselemente zwischen den erwähnten Teilen, die bei herkömmlicher Bauweise notwendig sind, wegzulassen bzw. solche Teile nur gerade so voluminös zu bauen als dies funktionsnotwenig ist ohne aber irgendwelche Verbindungspartien, wie Nuten und Stege, vorsehen zu müssen.

Zum Beispiel kann in einem solchen Verfahren mindestens eine vorgesehene Dichtung im Zusammenhang mit der Zwei- oder Mehrkomponentenspritztechnik aufgebaut werden, gemeinsam mit einem weiteren, an die Dichtung unmittelbar angrenzenden Teil, so beispielsweise und vorzugsweise einem Gehäuseteil oder einem durch das Gehäuse durchragenden Bedienungsorgan oder einem weiteren Hörgeräteteil, das für sich besonderes akkurat zu dichten ist.

In einer Ausführungsform der Erfindung wird für Aussenohr-Hörgeräte vorgeschlagen den akustischen Leiter ausgangsseitig des elektrisch-mechanischen Wandlers, welcher akustische Leiter üblicherweise als Kunststoffrohr ausgebildet ist, mit dem erwähnten Spritzgiessverfahren zu fertigen, sei dies gemeinsam direkt mit einer Gehäusepartie, oder sei dies z.B. mit einem elastischen formschlüssig dichtenden in eine Gehäuseaufnahme einzulegenden Montageteil.

In einer weiteren Ausführungsform wird vorgeschlagen einen akustischen Leiter eingangsseitig des akustisch-elektrischen Hörgeräte-Wandlers, in der erwähnten Spritzgiesstechnik zu fertigen, sei dies, beispielsweise wiederum gemeinsam mit einer Partie des Hörgeräte-Gehäuses oder mit einem spezifisch ausgelegten, beispielsweise dichtenden, elastischen Montageteil. In weiteren Ausführungsformen , die selbstverständlich je einzeln oder in Kombination mit weiteren, bevorzugten Ausführungsformen einsetzbar sind, werden Aufnahmen für Hörgeräte-Komponenten bzw. -Teile im erwähnten Spritzgiessverfahren gefertigt, sei dies, gemeinsam mit Gehäuse-Partien und/oder gemeinsam mit weiteren, unmittelbar an sie angrenzenden Bauteilen.

In einer weiteren Ausführungsform werden auf der Aussenseite des Gehäuses vorgegebene Flächenbereiche gemeinsam mit dem Gehäuse - aber aus anderem Material - im erwähnten Spritzgiessverfahren gefertigt, z.B. aus Designgründen und/oder um das Ertasten am Gehäuse angeordneter Bedienungsorgane allein mit den Fingern, zu erleichtern.

Die Erfindung wird anschliessend beispielsweise anhand von Figuren erläutert. Es zeigen:
Fig. 1 schematisch eine Partie eines Hörgeräte-Gehäuses in perspektivischer Darstellung mit angebauter Dichtung.
Fig. 2 ein Querschnitt durch einen Teil des Gehäuses nach Fig. 1 mit der aufgebauten Dichtung.
Fig. 3 einen Querschnitt durch die Gehäusewandung eines nach herkömmlichem Vorgehen aufgebauten Hörgerätes mit assemblierter Dichtung.
Fig. 4 schematisch einen Querschnitt durch einen Teil eines Hörgeräte-Gehäuses mit angebautem akustischem Leiter und/oder Aufnahme für ein Modul.
Fig. 5 schematisch einen Querschnitt durch einen Gehäusewandungsabschnitt mit Bedienungseinheit und aufgebauter Durchführung und Einheitshalterung.
Fig. 6 schematisch und prinzipiell das Verbinden zweier Hörgerät-Funktionseinheiten.

Bereits die im Rahmen der Beschreibungseinleitung gegebenen Ausführungen eröffnen dem Fachmann ohne weiteres, je nach zu konzipierendem Hörgerät bzw. dessen Aufbau eine grosse Zahl Möglichkeiten, durch vereintes Verarbeiten im Zwei- oder Mehrkomponenten-Spritzgiessverfahren, insbesondere auch durch Overmoulding, zwei oder mehr der vorzusehenden Bauteile platzsparend vereint zu fertigen, und dann gemeinsam als ein integraler Teil zu assemblieren. Trotzdem sollen nachfolgend anhand einiger schematischer Beispiele, bevorzugte Einsatzweisen des erwähnten Spritzgiessverfahrens erläutert werden. Auf die eigentliche Technik der Zwei- oder Mehrkomponenten-Spritzgiessverfahren wird nicht eingegangen, denn diese ist, wie erwähnt, aus dem generellen Komponentenbau, insbesondere aus der Kunststoffpress- und Spritzgiesstechnik hinlänglichst bekannt.

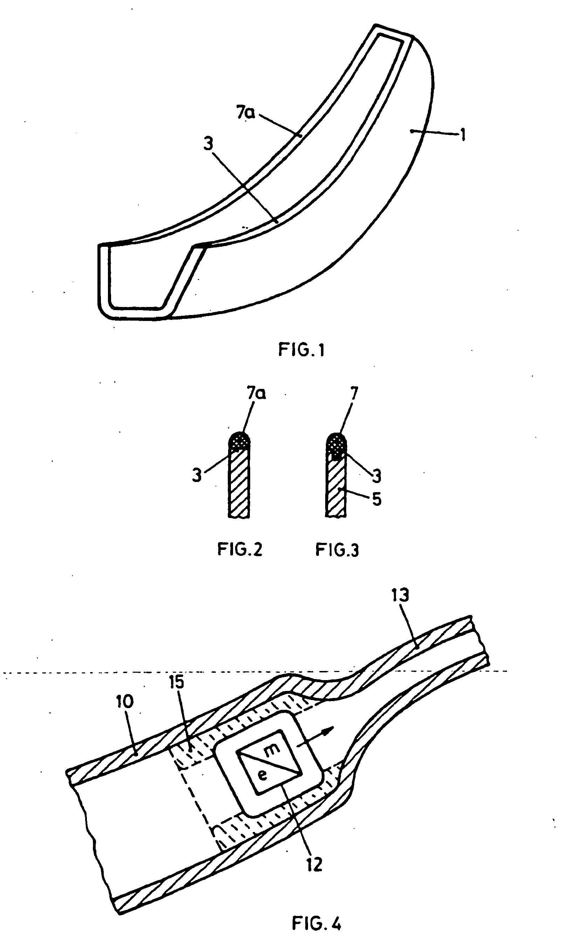

In Fig. 1 ist schematisch und perspektivisch die Schale 1 eines Hörgeräte-Gehäuses, beispielsweise eines Aussenohr-Hörgerätes, dargestellt. Entlang ihrer Stirnflächen 3 soll sie mit weiteren Gehäusepartien so assembliert werden, dass ihr Innenraum entlang dieser Stirnflächen 3 dicht verschlossen wird. Herkömmlicherweise wird dies dadurch gelöst, dass gemäss Figur 3 im Bereich der Stirnflächen 3 Positionierungs- und Halterungsvorkehrungen, wie dargestellt beispielsweise Nuten in die Wandung der Gehäusepartie 1 eingearbeitet werden, in welche nochmals, manuell, eine Dichtung 7 montiert wird.

An der erwähnten Gehäuseschale 1 bzw. der Stirnfläche 3 wird direkt, durch Zweikomponenten-Overmoulding-Spritzgiessverfahren eine Dichtung 7a aufgespritzt. Dabei genügt das Material der eigentlichen Gehäuseteilwandung den an das Gehäuse bezüglich Stabilität etc. zu stellenden Anforderungen, während das Material der im Overmoulding aufgespritzten Zweitkomponente den an die Dichtung 7a zu stellenden Anforderungen genügt. Die Dichtungspartie 7a kann dabei exakt so dimensioniert werden, wie es den Dichtungsanforderungen entspricht, ebenso kann die Wandung der Gehäusepartie 1 ausschliesslich auf Kriterien hin, die an das Gehäuse zu stellen sind, dimensioniert und geformt werden. Eine Ausbildung der Gehäusewand, welche zusätzlich der Assemblierung einer getrennten Dichtung 7, gemäss Fig. 3, genügt, entfällt.

In Fig. 4 ist schematisch dargestellt, wie beispielsweise an einem Hörgeräte-Gehäuse 10 einerseits, erfindungsgemäss ein akustischer Leiter 13 angebaut wird, z.B. ausgangsseitig eines im Hörgerät montierten, elektro-mechanischen Wandlers oder, in Analogie, eingangsseitig eines am Hörgerät vorgesehenen akustisch-elektrischen Wandlers (nicht dargestellt). Zusätzlich kann für die Wandlereinheit 12 im Gehäuse 10 ein elastischer, federnder Aufnahmeblock 15 integriert sein. Gehäuse 10 und akustischer Leiter 13 und/oder Gehäuse 10 und Aufnahmeblock 15 oder alle drei, Gehäuse 10, Aufnahmeblock 15 und akustischer Leiter 13 werden als ein Teil in einem Zwei- oder Dreikomponenten-Spritzgiessverfahren gefertigt. Dabei wird als Material des Gehäuses 10 bzw. dessen Wandung in üblicher Art und Weise ein Material gewählt, das den an das Gehäuse zu stellenden Anforderungen genügt, als Material für den akustischen Leiter 13 z.B. ein Material, welches, wie beispielsweise für das Aussenohrgerät, biokompatibel ist, und es wird als Material für den Aufnahmeblock 15 ein Material gewählt, das bezüglich Schlag- und Schockdämpfung und Halterung des Wandlers 12 den diesbezüglich zu stellenden Anforderungen genügt. Es ist dabei auch ohne weiteres möglich, beispielsweise das Material des Blockes 15 elektrisch leitend zu wählen, soll beispielsweise der Wandler 12 elektrisch geschirmt werden.

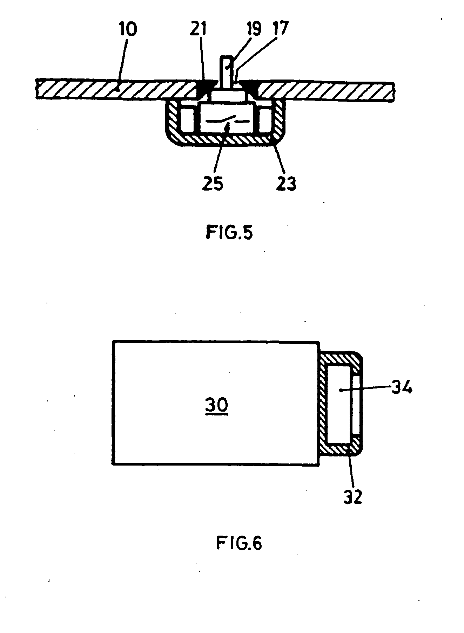

Wiederum schematisch ist in Fig. 5 ein erster Teil, beispielsweise wiederum eine Wandung einer Gehäusepartie 10 dargestellt, mit einer Durchführungsöffnung 17, durch welche ein Bedienungsorgan 19, wie ein Schalter ein Bedienungselement 25 des Hörgerätes, durchragt. Dadurch dass im Umrandungsbereich der Durchführungsöffnung 17 für das Bedienungsorgan 19, im Zwei- oder Mehrkomponenten-Spritzgiessverfahren, gemeinsam mit dem Gehäuseteil 10, elastische gegebenenfalls dichtende Partien 21 angespritzt werden, und gegebenenfalls zusätzlich auch eine Aufnahme 23 für federnde, satte Fixierung der Einheit 25 wird ein optimal platzsparender Einbau der Einheit 25 ermöglicht.

In Fig. 6 ist dargestellt wie am Gehäuse 30 eines Aggregates 34, beispielsweise eines Elektronikmoduls des Hörgerätes eine Aufnahme 32 zur entsprechenden Positionierung und Halterung eines weiteren Aggregates 34 mit dem erwähnten Zwei- oder Mehrkomponenten-Spritzgiessverfahren angebaut wird, womit wiederum eine optimal kleinbauende Assemblierung mit hoher Packungsdichte ermöglicht wird.

Aufgrund des Herstellungsverfahrens werden grosse Einsparungen beim Assemblieren erreicht: Es werden Assemblierungs-Schritte durch die integrale Zwei- oder Mehrteil-Herstellung eingespart. Weiter wird der gerade für Hörgeräte äusserst wichtige Vorteil erwirkt, dass funktionell unterschiedliche Teile, die nach Assemblierung ohnehin aneinander zu liegen kommen, gezielt mit den jeweils notwendigen Materialeigenschaften ausgelegt werden können, aber trotzdem als ein integraler Teil. Dadurch entfallen Bauvolumen konsumierende Massnahmen zur nachhaltigen Assemblierung dieser Teile. Nimmt man hierfür als Beispiel die in den Fig. 1 bis 3 dargestellte Ausführungsform so ist ersichtlich, dass eine Dichtung 7a die nur gerade den Dichtungsanforderungen genügen muss, wesentlich kleiner und dünner gefertigt werden kann, wenn sie am Teil 1 integral angeformt ist, als wenn sie separat als Dichtung 7 gefertigt und darnach, beispielsweise manuell, an die entsprechenden Stirnflächen des Teiles 1 montiert werden muss, sei dies durch Kleben, Stecken oder dgl. Die Präzision mit welcher die Dichtungspartie 7a unmittelbar an die die Stirnfläche 3 bildende Wand des Teiles 1 angebaut werden kann, ist mit gleicher Dimensionierung durch Assemblieren getrennter Teile kaum möglich oder nur mit hohem Aufwand.

## Patentansprüche

1. Aussenohr-Hörgerät umfassend ein Gehäuse und einen elektrisch-mechanischen Wandler sowie einen rohrförmigen akustischen Leiter, an das Gehäuse anschliessend und ausgangsseitig des elektrisch-mechanischen Wandlers, **dadurch gekennzeichnet, dass** der akustische Leiter durch Zwei- oder Mehr-Komponenten Spritzgiesstechnik gefertigt ist.

2. Aussenohr-Hörgerät nach Anspruch 1, **dadurch gekennzeichnet, dass** der akustische Leiter gemeinsam mit einer Gehäusepartie des Hörgerätes durch die Spritzgiesstechnik gefertigt ist.

3. Aussenohr-Hörgerät nach Anspruch 1, **dadurch gekennzeichnet, dass** der akustische Leiter gemeinsam mit einem Montageteil durch die Spritzgiesstechnik gefertigt ist.

4. Hörgerätegehäuse aus mindestens zwei Teilen und einem weiteren Wirkungsteil, mittels welchem die mindestens zwei Teile dichtend vereinigt sind, **dadurch gekennzeichnet, dass** mindestens eines der zwei Teile und das Wirkungsteil durch Zwei- oder Mehrkomponenten-Spritzgiesstechnik gefertigt sind.

5. Hörgerätegehäuse nach Anspruch 4, **dadurch gekennzeichnet, dass** mindestens der eine der mindestens zwei Teile eine Gehäuseschale ist.

6. Hörgerätegehäuse nach Anspruch 5, **dadurch gekennzeichnet, dass** die mindestens zwei Teile Gehäuseschalen sind.

7. Hörgerät mit einem Gehäuse nach einem der Ansprüche 4 bis 6.

## Claims

1. Behind the ear hearing device comprising a housing and an electro-mechanical transducer and, connected to the housing and at the output side of the electro-mechanical transducer, a tube-shaped acoustic conductor, **characterized in that** the acoustic conductor is manufactured by two-component or multi-component injection-moulding.

2. Behind the ear hearing device according to claim 1, **characterized in that** the acoustic conductor is manufactured by the injection-moulding jointly with a portion of the hearing aid housing.

3. Behind the ear hearing device according to claim 1, **characterized in that** the acoustic conductor is manufactured by the injection-moulding jointly with an assembly part.

4. Hearing device housing having at least two parts and an additional functional element by means of which the at least two parts are united in a sealing manner, **characterized in that** at least one of said at least two parts and said functional element are manufactured by the injection-moulding.

5. Hearing device housing according to claim 4, **characterized in that** at least said at least one of said at least two parts is a housing shell.

6. Hearing device housing according to claim 5, **characterized in that** said at least two parts are housing shells.

7. Hearing device comprising a hearing device housing according to one of claims 4 to 6.

## Revendications

1. Appareil auditif d'oreille externe comprenant un boîtier et un convertisseur électrique-mécanique ainsi qu'un conducteur acoustique tubulaire, faisant suite au boîtier et côté sortie du convertisseur électrique-mécanique, **caractérisé en ce que** le conducteur acoustique est fabriqué par une technique de moulage par injection de deux ou plusieurs composants.

2. Appareil auditif d'oreille externe selon la revendication 1, **caractérisé en ce que** le conducteur acoustique est fabriqué conjointement avec une partie de boîtier de l'appareil auditif par la technique de moulage par injection.

3. Appareil auditif d'oreille externe selon la revendication 1, **caractérisé en ce que** le conducteur acoustique est fabriqué conjointement avec une pièce de montage par la technique de moulage par injection.

4. Boîtier d'appareil auditif en au moins deux parties et une partie d'action supplémentaire au moyen de laquelle les au moins deux parties sont réunies d'une manière étanche, **caractérisé en ce qu'**au moins une des deux parties et la partie d'action sont fabriquées selon la technique de moulage par injection de deux ou plusieurs composants.

5. Boîtier d'appareil auditif selon la revendication 4, **caractérisé en ce qu'**au moins une des au moins deux parties est une coque de boîtier.

6. Boîtier d'appareil auditif selon la revendication 5, **caractérisé en ce que** les au moins deux parties sont des coques de boîtier.

7. Appareil auditif avec un boîtier selon l'une des revendications 4 à 6.
